# EUROPÄISCHE PATENTSCHRIFT

(11) **EP 0 756 979 B1**
(45) Veröffentlichungstag und Bekanntmachung des Hinweises auf die Patenterteilung: **19.05.1999**
(21) Anmeldenummer: 96108287.2
(22) Anmeldetag: 24.05.1996
(51) Int. Cl.: B61C 17/04, B61D 17/04, B62D 29/00

(54) **Führerraum für den Wagenkasten eines Schienenfahrzeugs**
Drivers cabin for the car body of a railway vehicle
Cabine du conducteur pour la caisse d'un véhicule ferroviaire

(30) Priorität: 31.07.1995 DE 19528035
(43) Veröffentlichungstag der Anmeldung: 05.02.1997
(73) Patentinhaber: Krauss-Maffei Verkehrstechnik GmbH, D-80997 München (DE)
(72) Erfinder: Holz, Rüdiger, 82237 Wörthsee (DE)

(56) Entgegenhaltungen:
- DE-A- 2 826 178
- DE-A- 4 232 953
- DE-A- 4 301 763

## Beschreibung

Die Erfindung bezieht sich auf einen Führerraum für ein Schienenfahrzeug gemäß dem Oberbegriff des Patentanspruchs 1.

Führerräume für Schienenfahrzeuge bestehen in bekannter Weise aus einem Gerippe, welches aus Profilen aus Stahl oder Aluminium zusammengeschweißt und das innen und außen mit einer Beblechung aus dem gleichen Werkstoff überzogen ist. Die Abstände der Profile richten sich nach der Dicke des Blechs, um ein Beulen bei Beanspruchung zu vermeiden. Die Versteifungsprofile für die Beblechung haben üblicherweise einen Abstand von 200 bis 300 mm, was eine große Anzahl von Profilen ergibt, die meist auch verschiedene Längen oder Zuschnitte an den Enden haben müssen. Durch die Teilevielfalt ist diese Bauart relativ teuer. Auch muß das Blech nach dem Aufschweißen thermisch gespannt und durch Aufspritzen von Entdröhnungsmasse und Einkleben von Isolierung wärme- und schallgedämpft werden. Zusätzlich ist innen eine Verkleidung anzubringen.

Eine weitere bekannte Bauart eines Führerraumes besteht aus einem Sandwichverbund aus Kunststoff. Innen und außen befinden sich die tragenden Schichten aus GFK, die durch einen Hartschaumkern auf Abstand gehalten werden. Hierbei entfallen Entdröhnung, Isolierung, Innenverkleidung und Profile. Da dieser Führerraum einen anderen Wärmedehnungskoeffizienten als der restliche Wagenkasten hat, kann er nur mit elastischen Klebefugen befestigt werden und trägt somit nur bedingt zur Festigkeit des Fahrzeugs bei.

Der Erfindung liegt die Aufgabe zugrunde, den Führerraum für den Wagenkasten eines Schienenfahrzeugs so zu gestalten, daß er gegenüber den herkömmlichen Bauarten eine höhere Stabilität bei geringerem Fertigungsaufwand aufweist.

Diese Aufgabe wird gemäß den Merkmalen des Patentanspruchs 1 gelöst. Durch die Verschweißung der Bauteile ist einerseits ein guter Kraftfluß zwischen diesen Teilen gewährleistet, während durch den Sandwichverbund die erforderliche Steifigkeit der gesamten Konstruktion erzielt wird. Hierdurch kann das Blech bei Druckspannungen oder Kräften senkrecht zur Fläche nicht beulen, was bisher nur durch aufwendig eingeschweißte Profile bewerkstelligt werden konnte.

Durch die Erfindung werden folgende Arbeitsgänge eingespart:
- Herstellen und Einschweißen der vielen Versteifungsprofile
- Aufspritzen einer Entdröhnung auf das Blech
- Zuschneiden und Einkleben der Wärmeisolierung in die einzelnen Blechfelder
- Herstellen und Einbauen einer Innenverkleidung.

Die weiteren Ansprüche betreffen vorteilhafte Ausgestaltungen der Erfindung.

In der Zeichnung ist ein Ausführungsbeispiel der Erfindung dargestellt. Es zeigen:
Fig. 1 die Seitenansicht eines Führerraumes,
Fig. 2 eine Explosionszeichnung der Bauteile eines Führerraumes,
Fig. 3 einen Teilschnitt durch das Dach eines Führerraumes.

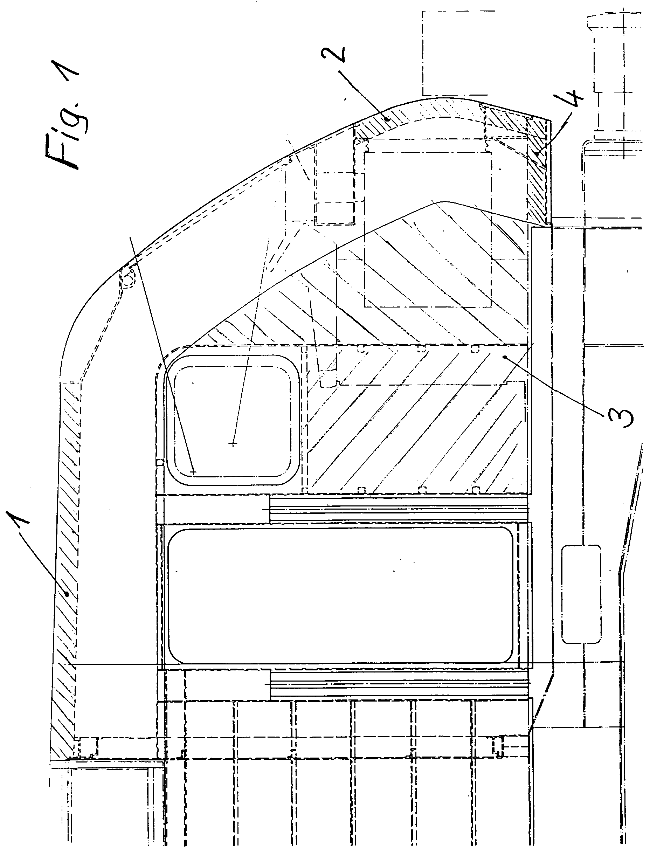

Gemäß Fig. 1 sind die einzelnen Baugruppen des Führerraumes wie ein Dach 1, eine Stirnwand 2, Seitenwände 3 und ein Boden 4 schaffiert dargestellt.

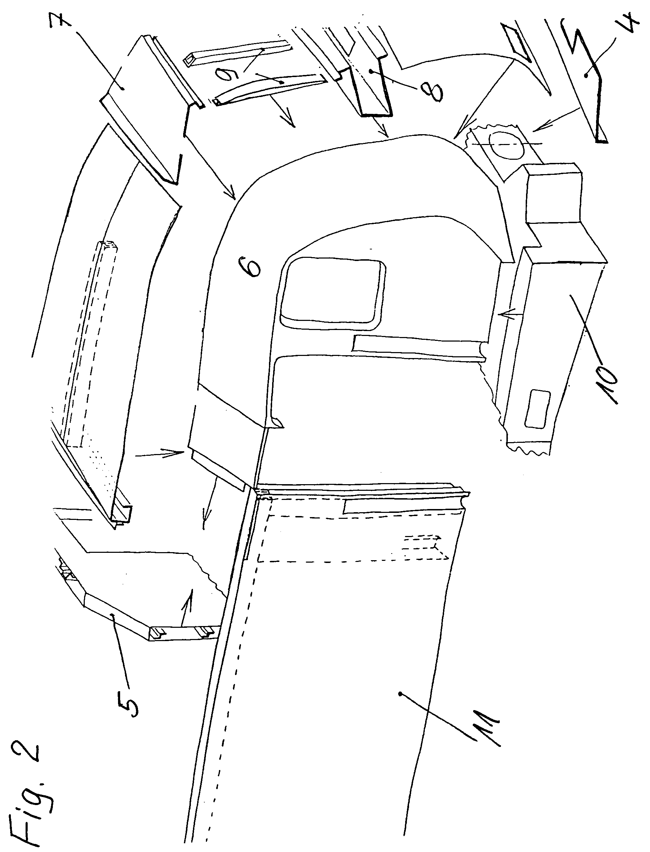

In Fig. 2 sind die Baugruppen 1 bis 4 gesondert herausgezeichnet. Außerdem sind noch weitere Bauteile wie eine Rückwand 5, eine Seitenwandsäule 6, ein oberer Rammträger 7, ein unterer Rammträger 8, Verbindungselemente 9, ein Untergestell 10 sowie eine Maschinenseitenwand 11 dargestellt. Der Zusammenbau der Teile ist durch Pfeile gekennzeichnet.

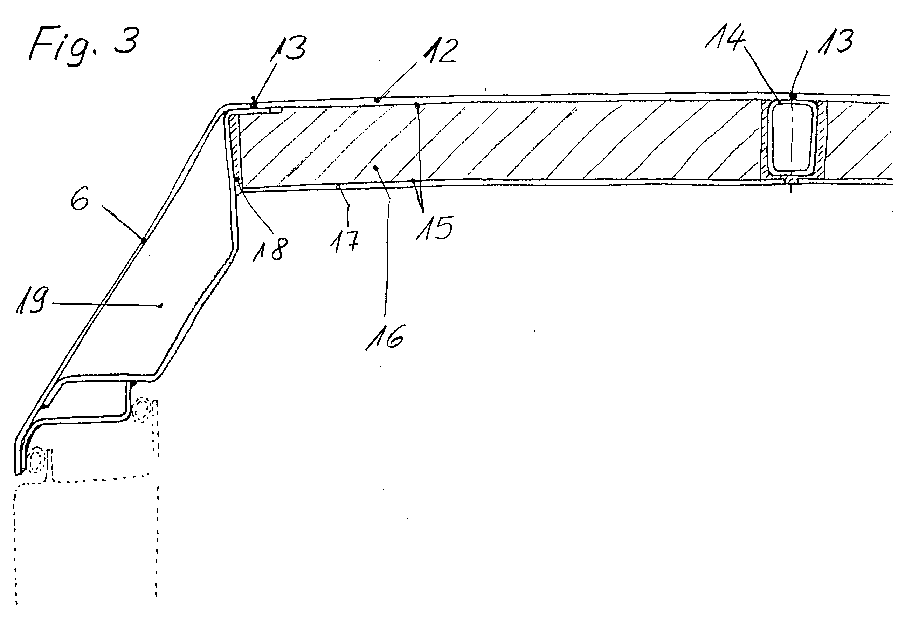

Der Baugruppenaufbau wird beispielweise in Fig. 3 für das Dach 1 gezeigt. Eine Außenbeblechung 12 ist mittels Schweißnähten 13 mit der als Hohlträger ausgebildeten Seitenwandsäule 6 und einem Profil 14 zusammengeschweißt. Dadurch ist ein guter Kraftfluß zwischen diesen Bauteilen sichergestellt. Mittels eines Klebers 15 sind eine Kernplatte 16 und eine zug- und druckfeste Innenverkleidungsplatte 17 mit dem Blech 12 als tragende Sandwichplatte verbunden. Zwischen dieser und der Seitenwandsäule 6 ist eine Dichtmasse 18 eingebracht. Der Hohlraum der Seitenwandsäule 6 ist mit einer Masse 19 ausgeschäumt.

## Patentansprüche

1. Führerraum für den Wagenkasten eines Schienenfahrzeugs, bestehend aus mehreren Baugruppen wie Dach (1), Stirnwand (2), Seitenwände (3) und Boden (4) mit einem Gerippe aus miteinander verschweißten Profilen (6, 14) und einer Außenbeblechung aus Metall, **dadurch gekennzeichnet,** daß die Außenbeblechung (12) mit den Profilen (6,14) mittels Schweißnähten (13) verschweißt und an ihrer Innenseite mit einer Kernplatte (16) und einer zug- und druckfesten Innenverkleidungsplatte (17) mittels eines Klebers (15) nach Art eines Sandwichverbundes verbunden ist.

2. Führerraum nach Anspruch 1, **dadurch gekennzeichnet,** daß die Kernplatte (16) eine Hartschaumplatte ist, die aus schwer entflammbarem Polyurethan besteht.

3. Führerraum nach Anspruch 1, **dadurch gekennzeichnet,** daß die Kernplatte (16) eine Wabenplatte aus Phenolharz ist.

4. Führerraum nach Anspruch 1, **dadurch gekennzeichnet,** daß die zug- und druckfeste Innenverkleidungsplatte (17) als dekorative Hochdruckschichtpreßstoffplatte ausgebildet ist.

5. Führerraum nach Anspruch 1, **dadurch gekennzeichnet,** daß die zug- und druckfeste Innenverkleidungsplatte (17) aus GFK besteht.

## Claims

1. A drivers cabin for the body of a rail mounted vehicle, consisting of a plurality of assemblies such as roof (1), front wall (2), side walls (3) and floor (4) with a framework of welded-together rolled sections (6, 14) and an outer metal cladding, characterised in that the outer metal cladding (12) is welded to the rolled sections (6, 14) by welded seams (13) and is on its inside connected to a core panel (16) and a tension and compression resistant inner cladding panel (17) by means of an adhesive (15), in the manner of a composite sandwich structure.

2. A driver's cabin according to claim 1, characterised in that the core panel (16) is a rigid foam panel consisting of a polyurethane of low flammability.

3. A driver's cabin according to claim 1, characterised in that the core panel (16) is a honeycomb panel of phenol resin.

4. A driver's cabin according to claim 1, characterised in that the tension and compression resistant inner cladding panel (17) is constructed as a decorative high-pressure laminated panel.

5. A driver's cabin according to claim 1, characterised in that the tension and compression resistant inner cladding panel (17) consists of glass fibre reinforced plastic material.

## Revendications

1. Cabine de conducteur pour la caisse d'un véhicule ferroviaire, constituée de plusieurs sous-ensembles comme toit (1), paroi frontale (2), parois latérales (3) et plancher (4), avec une ossature constituée de profilés 6, 14 soudés l'un à l'autre, et d'un habillage extérieur en métal, caractérisée par le fait que l'habillage extérieur (12) est soudé avec les profilés (6, 14) au moyen de cordons de soudure (13) et que sur sa face intérieure il est relié, au moyen d'un adhésif (15) et à la façon d'un complexe formant sandwich, avec une plaque formant noyau (16) et une plaque de revêtement intérieur (17) résistant à la traction et à la compression.

2. Cabine de conducteur selon la revendication 1, caractérisée par le fait que la plaque formant noyau (16) est une plaque de mousse dure qui est constituée de polyuréthane difficilement inflammable.

3. Cabine de conducteur selon la revendication 1, caractérisée par le fait que la plaque formant noyau (16) est une plaque en nids d'abeille en résine phénolique.

4. Cabine de conducteur selon la revendication 1, caractérisée par le fait que la plaque de revêtement intérieur (17) résistant à la traction et à la compression est conçue sous forme d'une plaque décorative obtenue par compression de couches sous haute pression.

5. Cabine de conducteur selon la revendication 1, caractérisée par le fait que la plaque de revêtement intérieur (17) résistant à la traction et à la compression est constituée de plastique armé de fibres de verre.
